# EUROPEAN PATENT APPLICATION

(11) **EP 2 103 375 A1**
(43) Date of publication of application: **23.09.2009**
(21) Application number: 09425106.3
(22) Date of filing: 17.03.2009
(51) Int. Cl.: B23K 26/08, B23K 26/40, B23K 37/04, B26D 7/20

(54) **A device for processing strips of material by means of a laser beam with a system in the processing area for supporting and feeding the material forward**

(30) Priority: 20.03.2008 IT FI20080053
(71) Applicant: OT-LAS S.r.l., 50041 Calenzano (FI) (IT)
(72) Inventor: Clementi, Gabriele, 50139 Firenze (IT); Mugnaioni, Marco, 50013 Campi Bisenzio (Firenze) (IT); Conti, Lorenzo, 53036 Poggibonsi (Siena) (IT)
(74) Representative: Mannucci, Michele

(57) **Abstract**

The machine for processing a strip of material (N) with the aid of a laser beam comprises: a system (14-17) for the forward feed of the material (N) to be processed, a system (19) for slidingly supporting the material to be processed and at least one scanning head (11) with a laser source (13), positioned above the sliding supporting system. The sliding supporting system comprises a plurality of laminar elements (31) arranged side-by-side, each with an edge for slidingly supporting the material to process. Said edges are arranged in a substantially coplanar manner so as to define a sliding plane for the material to process.

## Description

### Technical field

The present invention relates to machinery for the laser processing of products in strip form, such as products wound on rolls or piled in laps. More in particular, but not exclusively, the present invention relates to an assembly for laser processing with a polar scanning head to achieve continuous automatic finishing of textile materials.

### State of the art

The laser finishing of fabrics, coated textiles and other materials used in the manufacturing industry comprises a plurality of procedures in which suitably controlled and focused energy from a laser source is employed to obtain effects on the material such as, but not exclusively, cuts, perforations, incisions, markings, discolouring or any other changes in either the appearance or the physical properties of the material concerned.

This practice is now used with success, exploiting the great design speeds typical of polar scanning laser machines, but to date virtually all the applications have involved processing either finished garments or portions of fabric (sheets), the dimensions of which came within the typically square working field of the scanning laser machines.

Any attempts made in the past to apply the laser finishing technique to continuous processing (i.e. "on the fly") of the material in rolls or laps have all posed problems of precision and quality that careful analysis has found attributable mainly to an inadequate system for conveying and supporting the material in the processing area, and to an inadequate elimination of the fumes produced during the process.

An example of a machine for cutting a textile material unwound from a roll is disclosed in JP-A-61145882.

A different machine for cutting a textile material on a roll is disclosed in US-A-7284305.

EP-A-1762653 discloses a machine for cutting or engraving the edges of a fabric on the fly, as it is fed underneath a scanning head.

Another device for laser cutting of fabrics being fed on the fly, by means of a scanning head, is disclosed in WO-A-2004/016847.

### Summary of the invention

According to one aspect, the invention concerns a laser beam machine that uses a scanning head for the processing of a strip of material, in particular such as (but not exclusively) a strip of fabric, non-woven fabric, or other textile material, that partially or totally overcomes at least one of the problems of the known technique.

An object of one embodiment of the invention is to provide an improved support for the material being processed when it comes under the scanning head, in order to obtain a more precise processing action.

Basically, the invention involves a machine or device for processing a strip a material by means of a laser beam, comprising: a feed system for the forward feed of the material to process, a sliding supporting system for slidingly supporting the material to process, and at least one scanning head with a laser source located above said sliding supporting system. In the machine according to the invention, the sliding supporting system comprises a plurality of laminar elements arranged side by side, each with an edge for slidingly supporting the material being processed. These edges are in a substantially coplanar arrangement so as to define a plane along which the material being processed slides.

In some embodiments, the laminar elements are oriented with their supporting edges approximately parallel to the forward feed path of the material being processed. This reduces any friction on the strip of material as it is fed forward.

According to a preferred embodiment of the invention, there is a trap for the laser beam in between the laminar elements arranged side-by-side. This minimises any back-reflection of the laser radiation during processing of the material, which can cause the rupture of the material being processed.

In some embodiments, each the laminar element has a main portion lying on a plane approximately orthogonal to the sliding supporting plane defined by the supporting edges of the laminar elements. Each laminar element preferably also has a folded portion that acts as a reinforcement ribbing. In this embodiment, each laminar element or batten is basically composed of two portions of flat sheet that extend over the full length of the laminar element and lie on planes forming an angle coming preferably between 100° and 170°, and more preferably between 110° and 130°.

To reduce the risk of back-reflection, the laminar elements are preferably arranged symmetrically with respect to a longitudinal plane of symmetry orthogonal to the sliding plane on which the material is supported, so that the folded longitudinal portions forming the reinforcement ribbing on the laminar elements that come to be on one side of the plane of symmetry face in the opposite direction to those of the laminar elements on the other side of said plane.

To achieve a strong resistance to the laser radiation, the laminar elements are preferably made of a metal, such as brass. According to some embodiments, the surface of the laminar elements is treated to reduce any reflection phenomena. For instance, they may be coated with an absorbent material. More simply, they can be mechanically machined, e.g. by sanding, to increase their surface roughness and thereby reduce the reflection and cause scattering of the laser beam coming to impinge against said surfaces.

When the strip of material to be processed so requires, the machine may also comprise a pair of supporting blades along the longitudinal edges of the material to process.

In a preferred embodiment of the invention, the forward feed system comprises a first motorised roller and a second motorised roller, positioned respectively upstream and downstream from the system for supporting the material to process. The two rollers can advantageously be operated by separate motors. For a better control of the strip of material being processed, the motorised rollers can be coated with a material that has a high friction coefficient, preferably rubber.

The characteristics of the feed system for feeding the material to be processed can also be advantageously used with a different sliding supporting system, such as those designed according to conventional criteria, in which case, the advantages deriving from the characteristics of the forward feed system remain the same.

According to a preferred embodiment of the invention, there is also provided a system for the removal or extraction of the fumes or vapours generated by the interaction of the laser beam with the material being processed. According to a possible, preferred embodiment, said extractor system is designed to generate a blade of air oriented in a direction approximately parallel to the plane for slidingly supporting the strip of material, and preferably with a direction of flow parallel, and preferably opposite to the feed direction of the strip of material. As will become apparent from the description that follows, the advantages of this fumes extraction system can also be exploited in machines or devices that have a different system for feeding the strip of material forward and/or a different system for slidingly supporting the strip of material in the area where the laser processing takes place.

Further advantageous characteristics and possible embodiments of the invention are illustrated below with reference to one embodiment, and set forth in the attached claims.

### Brief description of the drawings

The invention is clarified in the description that follows and in the attached drawings showing a practical embodiment of the invention. More in particular, in the drawings:
Fig. 1 is an axonometric view of the device according to the invention;
Fig. 2 is a cross-sectional view along a vertical plane of the device, with the scanning head and the winding-unwinding assemblies removed;
Fig. 2A is a view of one of the rollers of the conveying system for the strip of material;
Fig. 3 is a detail of one of the laminar elements forming the sliding supporting plane for the material to be processed;
Fig. 4 is a cross-sectional view of the laminar element in Fig. 3;
Fig. 5 is an enlarged detail of the sliding supporting plane formed by the laminar elements in figures 3 and 4; and
Fig. 6 is an enlarged cross-sectional view of a portion of the laminar elements forming the sliding supporting plane.

### Detailed description of one embodiment of the invention

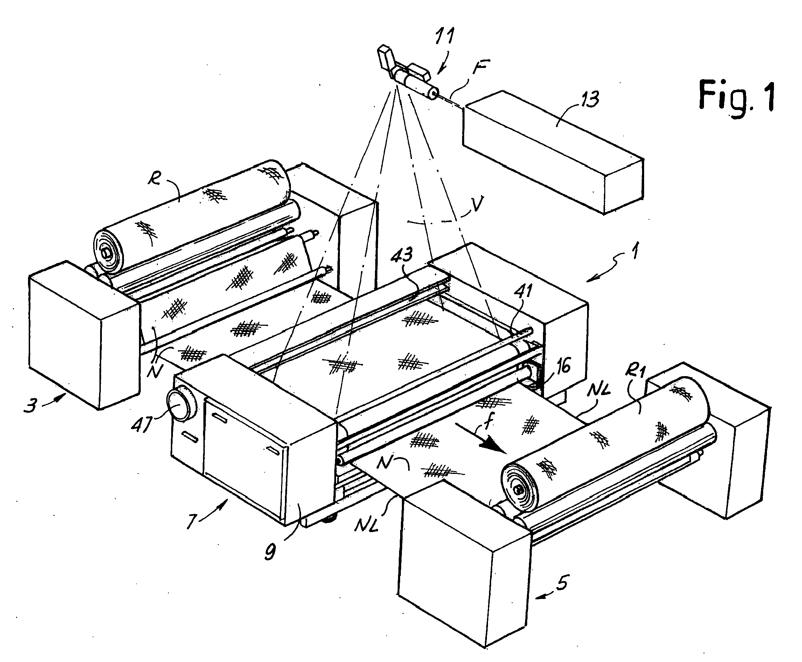

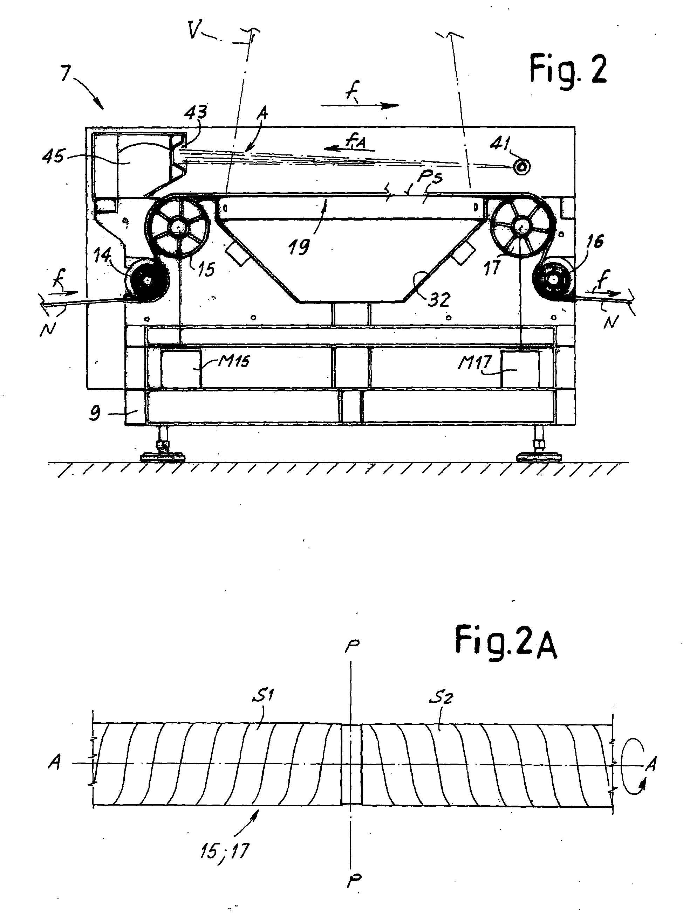

With initial reference to figures 1 and 2, the device, indicated by the numeral 1 as a whole, comprises an unwinding assembly 3, on which there is a roll R containing a strip of material N, e.g. a jersey fabric or a woven or non-woven fabric, or other material. On the side opposite the unwinding assembly 3, there is a winding assembly 5, in which a roll R1 rewinds the strip of material N after it has been processed. In between the two unwinding and winding assemblies 3, 5, there is the machine 7 proper for processing the strip of material. The configuration shown here is clearly for illustrative purposes and merely one example, in that the strip of material N may be fed to and collected from the machine using systems of another kind, e.g. systems that deliver the material from a pile of laps and rewind it onto a roll, or that collect it on a pile of laps, or again systems that deliver the material to be processed from a roll and pile up the processed material in laps.

The laser machine 7 proper comprises a base 9, above which there is a scanning system, or head 11 controlled by an electronic processor, which governs the movement of a laser beam F coming from a laser source 13 of suitable type, known to a person skilled in the art and not described in further detail herein. In a preferred embodiment of the invention, the machine 7 comprises a system for the forward feed of the material N to be processed, a high-precision system for supporting the material being processed and a system for extracting the fumes or vapours produced by the interaction of the laser beam with the strip of material N.

The main parts of the machine 7 are shown in Fig. 2. The conveyor system comprises a pair of motorised rollers 15 and 17, positioned respectively upstream and downstream from the area where the laser beam operates. Between the two motorised rollers 15 and 17, there is a sliding supporting system, globally indicated by the numeral 19, described in more detail later on. The sliding supporting system 19 forms the base of a pyramid-shaped volume V, see Fig. 1, in which the laser beam F can move due to the movement of the scanning system or head 11.

Each motorised roller 15, 17 is driven by a corresponding separate motor, schematically identified, for the sake of simplicity, as M15 for the motorised roller 15 and M17 for the motorised roller 17.

In some advantageous embodiments, one or other, or preferably both of the motorised rollers 15,17 have an alveolar structure, as shown in Fig. 2, i.e. they consist of an outer cylindrical casing attached to a central hub by means of radial panels. This gives the rollers 15,17 a rigid but very lightweight structure, with a low moment of inertia, that consequently enables an efficient control of the rollers movement and the opportunity to make them accelerate and decelerate very promptly and precisely under the control of a central programmable control unit (not shown).

According to some advantageous embodiments, one or other, or preferably both motorised rollers 15,17 are coated with a material that has a high coefficient of friction, such as natural or synthetic rubber, or another suitable material. Figure 2A schematically shows a possible configuration of a coating of this type. In some preferred embodiments of the invention, as shown in Fig. 2A, the coating on the roller is applied in the form of two tapes S1 and S2 helically wound in opposite directions on two portions that are substantially symmetrical with respect to a plane of symmetry P-P orthogonal to the axis A-A of the roller. This arrangement enables the roller 15, 17 to grip the strip of material N, positively controlling its forward feed without any mutual slipping between the strip of material N and the surface of the roller 15,17. At the same time, the angle of inclination of the two helically wound tapes around the cylindrical surfaces of the rollers 15,17 has the effect of pulling the strip of material N taut in the crosswise direction, thereby avoiding the formation of creases.

The tapes S1, S2 coating the motorised rollers 15 and 17 have a width preferably between 30 and 50 mm, and are therefore narrow, because in this way they induce a slight shear stress on the strip of material N that tends to pull the material wider without it becoming misshapen horizontally, a risk that could become particularly evident in the case of jersey fabrics if the shear component of the forces were excessive.

Upstream and downstream from the motorised rollers 15, 17, along the path covered by the strip of material N, according to advantageous embodiments of the invention, there are idle roller assemblies 14 and 16. The position of the rollers 14 and 16 is such that the route covered by the strip of material N winds at a suitable angle around the motorised rollers 15 and 17. It is advantageous for the winding angle to be preferably at least 90° or more preferably at least 100°.

Each of the rollers 15,17 is preferably made of a light alloy, aluminium or the like, to achieve a highly dynamic, high-precision movement with limited servicing needs, as well as a high energy efficiency. Each drive roller 15, 17 is driven by the corresponding motor M15 and M17, by means of a precision reduction gear with a limited slack and a short toothed belt transmission.

According to several advantageous embodiments, the motors M15 and M17 are open-ring stepping motors with a micro-stepping driver for reasons of simplicity and cost, a solution that guarantees the required precision and a smooth and reliable operation in a wide range of advancing speeds of the material, in the range of 0-12 m/min.

The particular shape of the conveyor system enables the following requirements to be met:
- a constant rate of forward feed of the material adjustable over a wide range of speeds;
- no lateral slipping of the material in the processing area;
- a constant tension on the material in the processing area;
- no vibrations of the material in transit.

Moreover, the conveyor assembly or system as described enables the following to be achieved:
- an extreme simplicity of the conveyor system that is highly dynamic and low-maintenance;
- a limited energy consumption, given the virtually total absence of any friction and the containment of any inertia;
- the opportunity to adjust the tension on the material in the processing area with ease.

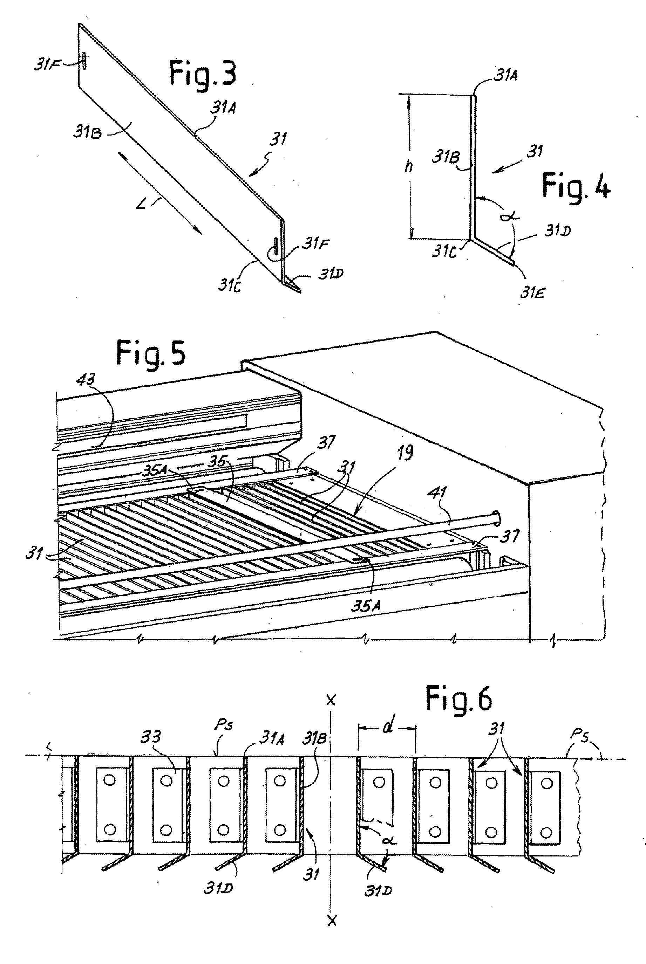

According to an advantageous embodiment, the supporting system, globally indicated by the numeral 19, on which the strip of material N slides and by which it is supported in the working area of the laser beam F, i.e. in line with the base of the virtual pyramid V in which the laser beam F moves during the scanning process, comprises a set of laminar elements 31 arranged side-by-side. The shape of these laminar elements 31 is clearly visible in figures 3 to 6.

According to an advantageous embodiment, each of the laminar elements 31 is in the form of an elongated strip or batten extending in the direction f of feed of the strip of material N. In its longitudinal extension L (Fig. 3), each laminar element 31 has an upper edge or border 31A. Each laminar element 31 also has a cross section with a main portion 31B that lies on a plane substantially orthogonal to the plane on which the strip of material N is slidingly supported, defined by the geometrical plane on which the edges 31A lie. This main portion 31B is attached along one edge 31C to a longitudinal folded portion 31D, that forms a sort of ribbing for the laminar element 31 and that has a border or edge 31E parallel to the border or edge 31A and to the folded edge 31C. Each laminar element 31 shaped in this way can be obtained by simply cutting and bending a strip made of metal, such as brass, or another suitable material.

The angle α (Fig.4) formed by the portions 31A and 31D of each laminar element 31 is between 100° and 170°, and preferably between 110° and 130°. The height h and the angle α characterising the battens or laminar elements 31 are chosen so as to eliminate or substantially reduce any spurious reflections of laser radiation that can cause the rupture or perforation of the material during processing. The thickness of the laminar element 31 is chosen to be particularly limited, e.g. of the order of 0.3-5 mm and preferably 0.5-3 mm, to reduce the friction between the strip of material N and the edges or borders 31A of the laminar elements or battens 31 to a minimum. The mutual distance d (Fig. 6) between the laminar elements 31 is chosen so as to simultaneously guarantee an adequate support for the strip of material N and sufficient space underneath the sliding supporting plane PS defined by the edges 31A to enable the removal by gravity, or with a suction system or by other means, of the processing waste generated by the laser cutting of the strip of material N.

As shown particularly in Fig. 6, the laminar elements or battens 31 are arranged in opposite directions on the two sides of a vertical plane forming the midline along X-X. In other words, the laminar elements 31 that come to be on the left-hand side of the plane X-X in Fig. 6 have their sloping portions or ribbing 31 D sloping towards the left, while the laminar elements or battens 31 that come to be on the right-hand side with respect to the vertical plane X-X in Fig.6 are oriented towards the right. As a result, the reinforcement and stiffening ribbing 31 D does not generate any spurious reflections of the laser beam. These spurious reflections can derive from the random reflection of the laser radiation off the metal surfaces underneath the strip of material N slidingly supported on the plane PS defined by the borders or edges 31A of the laminar elements or battens 31. Such reflections must be eliminated or at least reduced for two main reasons:
- because they are a source of processing defects, in that they can be reflected back onto the underside of the strip of material N, giving rise to signs of burning that make the material unsuitable for use;
- because they represent a potential fire hazard in that they impinge against the material or processing waste outside the focal plane of the laser beam. The reflected radiation consequently tends to trigger processes of combustion in the material instead of sublimation (as occurs on the focal plane) because, when the beam reaches the material, it is no longer concentrated sufficiently to induce the sublimation of the material.

Looking at the operation of the scanning head, it is clear that the laser radiation, or beam F is only perpendicular to the working surface at the centre of the processing area defined by the rectangular base of the pyramid indicated as V in Fig. 1. Said beam, vice versa, becomes progressively more and more slanted towards the periphery of the processing area, where it hits the surface slidingly supporting the strip of material N with an angle of inclination of approximately 70°. The height h and the spacing d of the battens or laminar elements 31, that form the sliding supporting plane PS with their upper edges or borders 31°, are chosen so as to create adjacent traps in between the laminar elements or battens 31 for dissipating and diverting the excess energy away from the strip of material N.

According to an advantageous embodiment, moreover, in order to further reduce the spurious reflections, the laminar elements or battens 31 can be sanded or otherwise treated to increase their surface roughness and ensure that the beam impinging on their surface tends to be dissipated instead of being reflected.

According to advantageous embodiments, the laminar elements or battens 31 are separately adjustable, e.g. by means of brackets 33 (Fig. 6) to which the laminar elements or battens 31 are attached with screws that engage in slots 31 F (Fig.3) provided at the ends of the longitudinal extent L of the laminar elements 31, orthogonally to the sliding supporting plane PS. This makes it straightforward to find and adjust the planarity of the longitudinal edges or borders 31A of the laminar elements 31, in addition to facilitating the replacement of single laminar elements 31 that may become damaged or worn. Single worn or broken battens or laminar elements 31 can be replaced with new elements that will normally be of greater height h (albeit to a minimal degree) than the adjacent elements, which have already become partially worn. The slots 31F enable a direct adjustment of the elevation of the edge 31A of such new battens or laminar elements 31.

According to several embodiments, because the longitudinal edges NL (Fig.1) of some types the material (i.e. the selvage in the case of textiles) tend to extend beyond the geometry of the sliding supporting plane defined by the battens or laminar elements 31, suitable substantially horizontal blades can be provided on these laminar elements 31 to retain the longitudinal edges NL of the strip of material N. One of these retaining blades is visible in particular in Fig. 5, and indicated therein by numeral 35. The retaining blades 35 preferably have an L-shaped cross-section with its longer stretch lying horizontally and its shorter stretch lying vertically between two adjacent laminar elements or battens 31. The retaining blades 35 can be attached with their ends 35A by means of screws and slots or holes on a flat transverse supporting surface 37 provided upstream and downstream from the processing area.

Underneath the sliding supporting system defined by the battens or laminar elements 31, there is advantageously a tank 32 for collecting processing scraps. The depth of the tank 32 (see Fig. 2) is advantageously designed to prevent any laser radiation penetrating beyond the laminar elements or battens 31 from being reflected back onto the material N being processed.

According to some advantageous embodiments, the processing area, defined by the surfaces 37 and by the blades 35 for retaining the selvage or longitudinal edges NL of the strip of material N, is a rectangular surface with its lesser dimension oriented in the direction of the forward feed f of the material and its greater dimension in the crosswise direction.

Containing the dimension in the direction of the forward feed enables an efficient extraction of the processing fumes even in the event of machines with a considerable crosswise extension, such as the machines used in the manufacture of furnishing fabrics and upholstery, in which the width of the strip of material exceeds 3 m, with a system that is described later on.

The choice of the longitudinal dimension derives from an analysis of the type of processing to be done, from which it is clear that keeping this width narrower than 1 meter does not restrict productivity, while at the same time it makes the effect of friction on the working surface negligible and contains the dimensions of the machine's overall footprint.

In some embodiments of the invention, above the system 19 for slidingly supporting the strip of material N being processed, between the sliding plane PS and the scanning head 11 there is a system for extracting the fumes or vapours generated by the interaction between the laser beam F and the strip of material N.

According to several advantageous embodiments, the fumes extraction system generates a blade-shaped air flow lying on an approximately horizontal plane parallel to the plane PS, as shown in Fig. 2 in particular, where the air flow is indicated as A. The flow is preferably laminar or substantially laminar. According to some embodiments, the flow is generated by a plurality of micro holes aligned along a blower bar 41. The micro holes are preferably arranged approximately along a generatrix of the blower bar 41 extending in a crosswise direction, i.e. orthogonal to the forward feed f direction of the strip of material N.

In some cases, providing the strip of material is not disturbed by the air flow, and providing the width of the processing area allows, a crosswise air flow can be used, i.e. at right angles to the machine direction instead of parallel to the machine direction. However, the parallel and discordant direction of the air flow with respect to the forward feed direction of the material being processed enables substantial advantages and benefits to be achieved in terms of the efficiency of the fumes extraction and the absence of any unwanted slipping of the material being treated due to the effect of the air flow. An air flow in the direction opposite to that of the forward feed is preferable to an air flow in the same direction as the forward feed of the material, because it enables an increase in the relative speed between the fumes and the material and also because it facilitates the stretching of the material over the working surface.

In the embodiment illustrated in the drawings, holes or micro holes are provided on the part of the blower bar 41 facing upstream, i.e. on the side from where the strip of material N arrives when it moves in the direction of the arrow. Opposite the blower bar 41 there is suction opening 43 with a substantially linear arrangement, as shown in Fig. 5 in particular. The flow of air A is thus oriented in the opposite direction to that of the forward feed f of the strip of material N.

The suction opening also extends crosswise to the forward feed direction f of the strip of material N, and consequently parallel to the blower bar 41. The flow entering the suction opening 43 is connected to a suction box 45 that is in turn connected to a suction duct 47 (Fig.1) connected to a disposal and filtering system of known type, not shown.

Thus, while processing is underway, a blade-shaped flow of air is generated that moves in the direction of the arrow fA (Fig.2) parallel and closely adjacent to the sliding plane PS defined by the upper edges or borders 31A of the battens or laminar elements 31, and in the opposite direction to that of the forward feed f of the strip of material N. This enables an effective extraction of the fumes or vapours generated by the processing so that they do not interfere with the passage of the laser beam and thereby influence its effect on the material N.

The flow of air could also be generated by a different system, e.g. through a longitudinal slot provided on a blower bar, instead of a series of micro holes. Generally speaking, the air flow generation system is sufficient in any case to ensure that the air emerging through the micro holes or other opening(s) undergoes a volumetric amplification of the flow and generates a blade of air approximately parallel to the surface of the material being processed. The flow of air can be adjusted by adjusting the flow rate of the air delivered to the blower bar 41.

It goes without saying that the drawings merely shows one embodiment, given here as a practical demonstration of the invention, which may vary in shape and layout without departing from the scope of the invention. Any use of reference numbers in the attached claims is merely for the purpose of facilitating the reading of said claims in relation to the description and drawings, and shall not be construed to restrict the scope of protection, as represented by the claims, in any way.

## Claims

1. A machine for processing a strip of material by means of a laser beam, comprising: a system for the forward feed of the material to be processed, a system for slidingly supporting the material to be processed, and at least one scanning head with a laser source, positioned above said sliding supporting system; wherein said sliding supporting system comprises a plurality of laminar elements arranged side-by-side and, each having an edge for slidingly supporting the material to process, said edges being arranged substantially in a coplanar manner so as to create a plane along which the material to be processed slides.

2. The machine according to claim 1, wherein said laminar elements are oriented with their supporting edges approximately parallel to the direction of the forward feed of the material to be processed.

3. The machine according to claim 1 or 2, wherein between the side-by-side laminar elements a trap for the laser beam is provided.

4. The machine according to one or more of the previous claims, wherein said laminar elements each has a main portion lying on a plane approximately orthogonal to the sliding supporting plane defined by the edges of the laminar elements.

5. The machine according to claim 4, wherein each laminar element has a folded longitudinal portion opposite its supporting edge.

6. The machine according to claim 5, wherein the main portion and the longitudinal portion lie on planes forming an angle between 100° and 170°, and preferably between 110° and 130°.

7. The machine according to one more claims from 1 to 3, wherein each laminar element comprises a straight sheet with a cross-section that has a ribbing folded at an angle preferably coming between 100° and 170°, and more preferably between 110° and 130°.

8. The machine according to claim 5, 6 or 7, wherein said laminar elements are arranged symmetrically with respect to a longitudinal plane of symmetry orthogonal to the supporting plane, so that said longitudinal folded portions, or said folded ribbing on the laminar elements, located on either side of the plane of symmetry face in opposite directions with respect to those of the laminar elements on the other side of said plane.

9. The machine according to one or more of the previous claims, wherein said laminar elements are made of metal.

10. The machine according to claim 9, wherein said laminar elements are made of brass.

11. The machine according to one or more of the previous claims, wherein said laminar elements are treated on the surface to reduce their reflection of the laser beam.

12. The machine according to claim 11, wherein said laminar elements are sanded.

13. The machine according to one or more of the previous claims, wherein said laminar elements are adjustable in height to enable the alignment of their supporting edges.

14. The machine according to one or more of the previous claims, comprising a pair of retaining blades for the longitudinal edges of the material being processed.

15. The machine according to claim 14, wherein said retaining blades have an L-shaped cross-section, with one portion lying substantially parallel to the sliding plane defined by the supporting edges of said laminar elements.

16. The machine according to one more of the previous claims, wherein said forward feed system comprises a first motorised roller and a second motorised roller, placed respectively upstream and downstream from the supporting system for the material being processed.

17. The machine according to claim 16, wherein said first motorised roller and said second motorised roller are operated by separate motors.

18. The machine according to claim 16 or 17, wherein said first motorised roller and said second motorised roller are coated with a material that has a high friction coefficient, preferably rubber.

19. The machine according to claim 18, wherein said coating with a high friction coefficient is applied to at least one of said first and second motorised rollers, along two helicoidal lines symmetrical with respect to the midline of the respective motorised roller.

20. The machine according to one or more of claims 16 to 19, wherein said first motorised roller and said second motorised roller are made of a metallic material of low specific gravity and with a lightweight alveolar stiffening structure.

21. The machine according to one or more of claims 16 to 20, wherein upstream from the first motorised roller and downstream from the second motorised roller, along the route covered by the strip of material, there are respective idle return rollers positioned so that the material being processed is entrained around each motorised roller at an angle of at least 90°, and preferably of 100° or more.

22. The machine according to one or more of the previous claims, comprising an unwinding assembly for delivering the material to be processed and a winding assembly for recovering the processed material.

23. The machine according to one or more of the previous claims, wherein the working surface of the laser beam is substantially rectangular, with a longer dimension oriented crosswise to the direction of forward feed of the strip of material and a shorter dimension oriented parallel to the direction of said forward feed.
